# EUROPEAN PATENT APPLICATION

(11) **EP 4 648 155 A1**
(43) Date of publication of application: **12.11.2025**
(21) Application number: 25172961.2
(22) Date of filing: 28.04.2025
(51) Int. Cl.: H01M 10/04, H01M 50/103, H01M 50/119, H01M 50/136, H01M 50/148, H01M 50/159, H01M 50/166

(54) **BATTERY AND METHOD OF MANUFACTURING THE BATTERY**

(30) Priority: 30.04.2024 KR 20240057792
(71) Applicant: SAMSUNG SDI CO., LTD., Yongin-si, Gyeonggi-do 17084 (KR)
(72) Inventor: BYUN, Inseop, 17084 Yongin-Si, Gyeonggi-do (KR); LEE, Jeawoan, 17084 Yongin-Si, Gyeonggi-do (KR)
(74) Representative: Gulde & Partner

(57) **Abstract**

A battery (200) may include an electrode assembly (220) including electrodes, and a body cup (210) that includes a first reference wall (212) and a first sidewall (214) provided adjacent to the first reference wall (212), with the body cup (210) having an open end and the body cup (210) accommodating the electrode assembly (220). The battery (200) also includes a cover cup (230) that includes a second reference wall (232) and a second sidewall (234) provided adjacent to the second reference wall (232). The cover cup (230) has an open end and is accommodated in the body cup (210) such that the second reference wall (232) closes the open end of the body cup (210). At least a portion of the first sidewall (214) and at least a portion of the second sidewall (234) are joined to form a flange (240).

## Description

### BACKGROUND

### Field

The present disclosure relates to a battery and a method of manufacturing the battery.

### Description of the Related Art

Unlike primary batteries that are not designed to be recharged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Batteries in which an energy density is high (an amount of energy that may be stored per unit volume is large) may provide longer execution times or longer mileage in portable devices or electric vehicles. Therefore, the energy density of secondary batteries is an important factor affecting the performance of the secondary batteries.

The information disclosed in this background section is for enhancement of understanding of the background of the present disclosure, and therefore, it may contain information that does not constitute related (or prior) art.

### SUMMARY

Aspects of embodiments of the present disclosure provide a battery with high energy density and a method of manufacturing the battery, wherein an electrode assembly of the battery may swell during operation. Swelling may cause undesired use of space.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to an aspect of the present disclosure, a battery may include an electrode assembly including electrodes, a body cup including a first reference wall and a first sidewall provided adjacent to the first reference wall. The body cup may have an open end and may accommodating the electrode assembly. The battery may include a cover cup including a second reference wall and a second sidewall provided adjacent to the second reference wall. The cover cup may have an open end. The cover cup may be accommodated in the body cup such that the second reference wall closes the open end of the body cup. At least a portion of the first sidewall and at least a portion of the second sidewall may be joined to form a flange. Hence, the flange may create a free space, in which the swelling electrode assembly can push the second reference wall.

According to some embodiments of the present disclosure, the flange extends in the same direction as the first sidewall and the second sidewall. The sidewalls may extend in a thickness direction of the battery. An advantage of this embodiment may be that swelling that occurs in the direction the first sidewall and the second sidewall extend in, uses the free space effectively.

According to some embodiments of the present disclosure, the direction that the flange extends is perpendicular to the first reference wall and the second reference wall. An advantage of this embodiment may be that the free space can extend away from the battery perpendicular to the first reference wall and the second reference wall.

According to some embodiments of the present disclosure, the electrode assembly may be formed by stacking the electrodes in the direction that the flange extends. An advantage of this embodiment may be that such an electrode assembly usually swells in the stacking direction, i.e. in a direction in which the electrodes or electrode plates are stacked behind each other, such that the electrode assembly may effectively use the free space when swelling.

According to some embodiments of the present disclosure, the electrode assembly is formed by winding the electrodes about a winding axis that may be perpendicular to a direction that the flange extends. An advantage of this embodiment may be that such an electrode assembly usually swells perpendicular to the winding axis, such that the electrode assembly may effectively use the free space when swelling.

According to some embodiments of the present disclosure, the electrode assembly may be a wound electrode assembly in which a flat portion and a curved portion are alternately formed, the flat portion being configured such that the electrodes are stacked in a direction that the flange extends. An advantage of this embodiment may be that such an electrode assembly effectively uses the free space when swelling.

According to some embodiments of the present disclosure, the battery is configured to swell may a direction that is perpendicular to the first reference wall and the second reference wall. An advantage of this embodiment may be that such an electrode assembly effectively uses the free space when swelling.

According to some embodiments of the present disclosure, the battery is configured such that as swelling occurs, the second reference wall may be deformed in a direction that the flange extends and into a surplus space surrounded by the second reference wall and the flange may be reduced. An advantage of this embodiment may be that the second reference wall gives way for the swelling electrode assembly towards the free space.

According to some embodiments of the present disclosure, at least a portion of the body cup and/or at least a portion the cover cup may include stainless steel. An advantage of this embodiment may be that stainless steel is flexible and able to elastically deform when the electrode assembly swells.

According to some embodiments of the present disclosure, an electrode terminal may be arranged on at least one surface of the first sidewall of the body cup. An advantage of this embodiment may be that the deformation of the second reference wall due to selling of the electrode assembly does not affect and e.g. move the electrode terminal.

According to some embodiments of the present disclosure, at least a portion of an inner surface of the first sidewall and at least a portion of an outer surface of the second sidewall may be joined. An advantage of this embodiment may be that the electrode assembly, even when it swells, is hindered from undesired movement and/or that the mechanical stability of the flange is improved.

According to some embodiments of the present disclosure, the body cup and the cover cup may open in the same direction.

According to some embodiments of the present disclosure, the reference wall of the respective one of the body cup and the cover cup may be a base, ground or bottom wall.

According to some embodiments of the present disclosure, sidewall of the respective one of the body cup and the cover cup may be a lateral side wall.

According to some embodiments of the present disclosure, the sidewall of the respective one of the body cup and the cover cup is provided adjacent to the reference wall of the respective one of the body cup and the cover cup may mean that the sidewall is in contact with and/or protrudes from the reference wall.

According to some embodiments of the present disclosure, the flange may be a projecting flat rim or collar. The flange may extend away from the first reference wall and/or from the second reference wall. The flange may extend perpendicular to the first reference wall and/or to the second reference wall. The flange may comprise opposite side sections. The opposite side sections may be spaced from each other in parallel to first reference wall and/or to the second reference wall. The opposite side sections may be spaced from each other perpendicular to first side wall and/or to the second side wall. The surplus space may be arranged between the opposite side sections of the flange.

According to another aspect of the present disclosure, a method for manufacturing a battery, e.g. the battery of the aforementioned aspect, which may include inserting an electrode assembly including electrodes into a body cup including a first reference wall and a first sidewall provided adjacent to the first reference wall, with the body cup having an open end. The method may include positioning a cover cup in the body cup such that a second reference wall of the cover cup a second sidewall of the cover cup that is provided adjacent to the second reference wall closes the open end of the body cup. The method may include joining at least portions of overlapping portions of the first sidewall of the body cup and the second sidewall of the cover cup. Hence, the flange may create a free space, in which the swelling electrode assembly can push the second reference wall.

According to some embodiments of the present disclosure, the method may further include cutting at least a portion of the first sidewall of the body cup and the second sidewall of the cover cup along a line that is parallel to the first reference wall and the second reference wall. An advantage of this embodiment may be that the flange is formed by the first and second sidewalls, wherein no free end of the first or second sidewalls protrudes a free end of the respective other side wall, which may waste space and could case sections of the flange that are more fragile than other sections.

According to some embodiments of the present disclosure, at least a portion of a part in which an inner surface of the first sidewall that overlaps an outer surface of the second sidewall is joined to the outer surface of the second sidewall. An advantage of this embodiment may be that the electrode assembly, even when it swells, is hindered from undesired movement and/or that the mechanical stability of the flange is improved.

According to some embodiments of the present disclosure, free or surplus space resulting from the formation of the flange may absorb additional battery volume cause by swelling of the battery. An advantage of this embodiment may be that space is efficiently used, which may improve battery capacity per battery volume.

According to some embodiments of the present disclosure, a battery having high energy density may be achieved by configuring the case structure taking into account the direction that the battery may swell.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing an example of a battery cell according to embodiments of the present disclosure.
FIG. 2 illustrates a cross-sectional view showing an example of a battery according to embodiments of the present disclosure.
FIG. 3 illustrates a cross-sectional view showing an example of a body cup and a cover cup according to embodiments of the present disclosure.
FIG. 4 is a plan view showing an example of the first reference wall of the body cup according to embodiments of the present disclosure.
FIGS. 5 and 6 illustrate an example of a process of manufacturing a battery according to embodiments of the present disclosure.
FIG. 7 illustrates examples of electrode assemblies according to embodiments of the present disclosure.
FIG. 8 illustrates an example of swelling occurring in a battery according to embodiments of the present disclosure.
FIG. 9 is a flowchart showing an example of a method for manufacturing a battery according to embodiments of the present disclosure.

### DETAILED DESCRIPTIONS

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

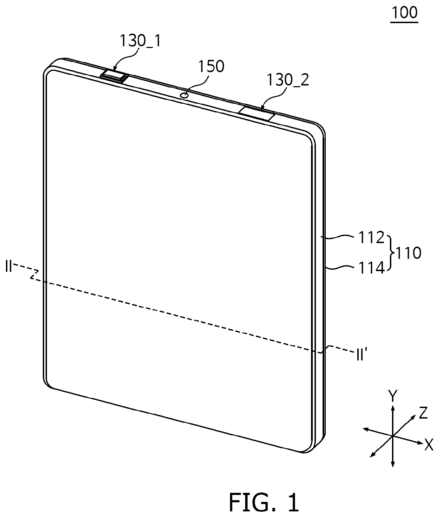

FIG. 1 illustrates a perspective view showing an example of a battery cell 100 according to embodiments of the present disclosure. Referring to FIG. 1, the battery cell 100 may include an electrode assembly including, for example, at least one electrode wound or stacked with a separator, which is an insulator, between a positive electrode and a negative electrode. The battery cell 100 also includes a case 110 in which the electrode assembly is embedded. The battery cell 100 illustrated in FIG. 1 may be a type of secondary battery.

Each of the positive electrode and the negative electrode may include a current collector made of a thin metal foil having a coated portion on which an active material is coated and an uncoated portion on which an active material is not coated. The positive electrode and the negative electrode are wound after interposing the separator, which is an insulator, therebetween. However, the present disclosure is not limited thereto, and the electrode assembly may have a structure in which a positive electrode and a negative electrode each made of a plurality of sheets, are alternately stacked with a separator interposed therebetween. In general, the electrode assembly may be any structure including electrodes.

The case 110 may form the overall exterior of the battery cell 100 and may be formed of a conductive metal, such as aluminum, an aluminum alloy, or nickel-plated steel. According to embodiments, the case 110 may include a stainless material (e.g., stainless steel). The case 110 may also provide a space in which the electrode assembly is accommodated.

According to embodiments, the case 110 may be formed by joining a body case 112 and a cover case 114. For example, the case 110 may be formed by metal-joining (e.g., welding, brazing, or soldering) the body case 112 and the cover case 114. A flange for joining may be formed in the battery cell 100 (e.g., the case 110). In embodiments, the case 110 may be manufactured by using a cup-shaped hard material and may include, for example, a body cup and a cover cup.

A positive terminal 130_1 electrically connected to the positive electrode and a negative terminal 130_2 electrically connected to the negative electrode may be coupled to the case 110. The positive and negative terminals 130_1 and 130_2 may be provided on at least one side of the case 110. The positions of the positive and negative terminals 130_1 and 130_2 are not limited to the positions illustrated in FIG. 1 and may be changed.

In embodiments, the case 110 may include an electrolyte injection port 150. The electrolyte injection port 150 may be a through-hole formed in at least one side of the case 110 and may be formed such that an electrolyte can be injected into the case 110 after the body case 112 and the cover case 114 are joined and sealed. The electrolyte injection port 150 may be sealed with a sealing member after the electrolyte is injected.

The battery cell 100 may be a lithium battery cell, a sodium battery cell, or the like. However, the scope of the present disclosure is not limited to such examples, and the battery cell 100 may be any battery that is capable of repeatedly providing electricity through charging and discharging. In embodiments, when the battery cell 100 is a lithium battery cell, the lithium battery cell may be used in electric vehicles (EVs) because the lithium battery cell has excellent lifespan characteristics and high rate characteristics. For example, the lithium battery cell may be used in EVs such as plug-in hybrid electric vehicles (PHEVs). In addition, the lithium battery cell may be used in the fields that require a large amount of power storage. For example, the lithium battery cell may be used in electric bicycles, power tools, and the like.

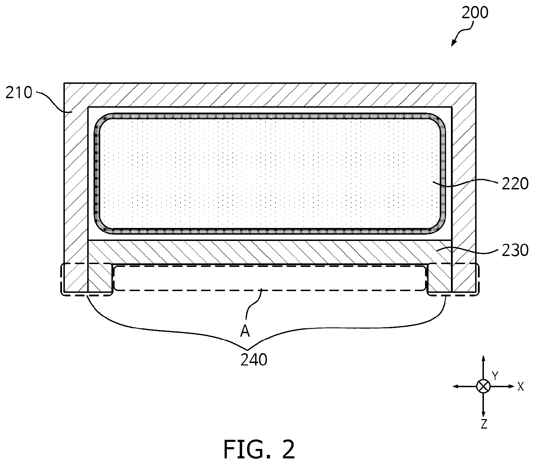

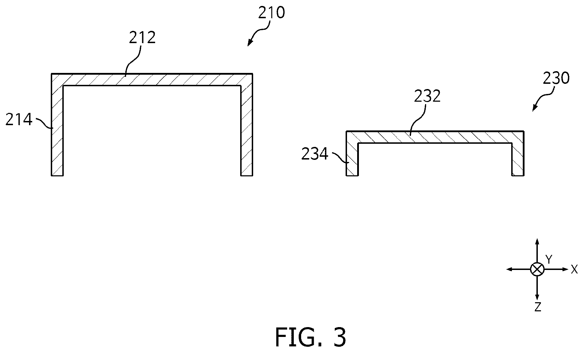

FIG. 2 illustrates a cross-sectional view showing an example of a battery 200 according to embodiments of the present disclosure, and FIG. 3 illustrates a cross-sectional view showing an example of a body cup 210 and a cover cup 230 according to embodiments of the present disclosure. Referring to FIGS. 2 and 3, the battery 200 may include an electrode assembly 220 including electrodes, the body cup 210 in which the electrode assembly 220 is accommodated, and the cover cup 230 sealing an open surface of the body cup 210. In this case, FIG. 2 is a cross-sectional view of the battery cell of FIG. 1 taken along line II-II'.

According to embodiments, the body cup 210 may include a first reference wall 212 and a first sidewall 214 surrounding the first reference wall 212. The first sidewall 214 may be formed along the circumference of the first reference wall 212. In embodiments, when the first reference wall 212 is polygonal, a plurality of first sidewalls 214 may be respectively formed to correspond to a plurality of sides (edges) of the first reference wall 212.

According to embodiments, one end of the body cup 210 may be open. For example, the body cup 210 may have a shape of a prism or a cylinder in which one of the surfaces is omitted. In general, the overall shape of the body cup 210 may be approximately in the shape of a cup. For example, the body cup 210 may be in the shape of a cup that is open on a side opposite to the first reference wall 212. According to embodiments, an electrode terminal of the battery 200 may be arranged on at least one surface of the body cup 210.

The body cup 210 provides an accommodation space for accommodating the electrode assembly 220 including the electrodes. That is, the electrode assembly 220 may be accommodated in the accommodation space of the body cup 210.

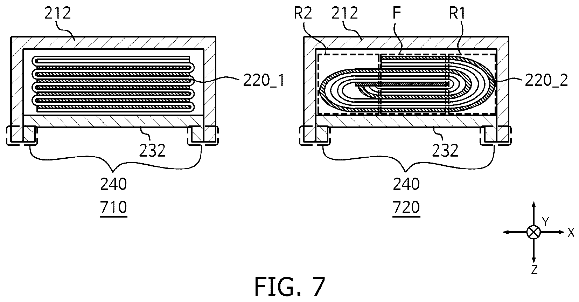

According to embodiments, the electrode assembly 220 may be formed by stacking or winding. For example, the electrode assembly 220 may be formed by winding a positive electrode, a negative electrode, and a separator. As another example, the electrode assembly 220 may be formed by stacking electrodes and a separator. However, the scope of the present disclosure is not limited to such examples, and the electrode assembly 220 may have any structure that includes electrodes. An example of the electrode assembly 220 according to embodiments of the present disclosure is described in more detail below with reference to FIG. 7.

According to embodiments, the cover cup 230 may include a second reference wall 232 and a second sidewall 234 surrounding the second reference wall 232. For example, the second sidewall 234 that is perpendicular to the second reference wall 232 may be formed along the circumference of the second reference wall 232. In embodiments, when the second reference wall 232 is polygonal, a plurality of second sidewalls 234 may be respectively formed to correspond to a plurality of sides (edges) of the second reference wall 232. The second reference wall 232 of the cover cup 230 may have a shape identical to or similar to that of the first reference wall 212 of the body cup 210. The second reference wall 232 of the cover cup 230 may be parallel to the first reference wall 212 of the body cup 210. In the illustrated example both the first reference wall 212 and the second reference wall 232 may be parallel to an XY plane.

According to embodiments, one end of the cover cup 230 may be open. For example, the cover cup 230 may be a prism or a cylinder in which one side is open. The overall shape of the cover cup 230 may be approximately in the shape of a cup. For example, the cover cup 230 may be in the form of a cup that is open on a side opposite to the second reference wall 232. As a whole, the cover cup 230 may have a shape similar to that of the body cup 210.

The cover cup 230 may be accommodated in the body cup 210. For example, the cover cup 230 may be accommodated in the body cup 210 so that the second reference wall 232 of the cover cup 230 blocks the open end of the body cup 210. As a specific example, the cover cup 230 may be accommodated in the body cup 210 so that the second reference wall 232 of the cover cup 230 is parallel to the first reference wall 212 of the body cup 210 and blocks the open end of the body cup 210, with at least a portion of the outer circumferential surface of the second sidewall 234 of the cover cup 230 being contact with at least a portion of the inner circumferential surface of the first sidewall 214 of the body cup 210. To this end, the cover cup 230 may have a cup shape that is smaller than the body cup 210. For example, the height of the second sidewall 234 of the cover cup 230 may be less than the height of the first sidewall 214 of the body cup 210.

According to embodiments, the body cup 210 and the cover cup 230 may each be formed from a hard metal. For example, the body cup 210 and the cover cup 230 may each be formed from a metal material, e.g. a stainless steel material.

According to embodiments, a flange 240 may be formed by joining (e.g., metal-joining such as welding, brazing, or soldering) at least a portion of the first sidewall 214 of the body cup 210 and at least a portion of the second sidewall 234 of the cover cup 230. Because a portion of the first sidewall 214 and a portion of the second sidewall 234 form the flange 240, the extension direction of the flange 240 (e.g., the height direction of the flange 240, which is the Z-axis direction shown in FIG. 2) may be the same as the direction that the first sidewall 214 and the second sidewall 234 extend (e.g., the height direction of the first sidewall 214 and the second sidewall 234, which the Z-axis direction in FIG. 2). The direction that the flange 240 extends may be perpendicular to the first reference wall 212 and the second reference wall 232 (e.g., the first reference wall 212 and the second reference wall 232 are parallel an XY plane as shown in FIG. 2). The extension direction of the flange 240 may be the thickness direction of the battery 200.

As the flange 240 is formed in the battery 200, a surplus space A surrounded by the flange 240 and the second reference wall 232 of the cover cup 230 may be defined. That is, the surplus space A may be defined outside the battery 200 in the thickness direction.

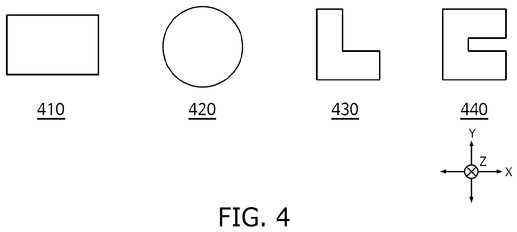

FIG. 4 is a plan view showing examples of the first reference wall of the body cup according to embodiments of the present disclosure. The first reference wall of the body cup may be formed in any shape. For example, the first reference wall may be formed in a rectangular shape, as in a first example 410. In this case, the first sidewall may be formed along the four sides of the rectangular first reference wall. As another example, the first reference wall may have a circular shape, as in a second example 420. In this case, the first sidewall may be formed around the circumference of the circular first reference wall. As another example, the first reference wall may be a L-shaped polygon, as in a third example 430. In this case, the first sidewall may be formed along six sides of the first reference wall in the approximate L-shape. As another example, the first reference wall may be an angled C-shaped polygon, as in a fourth example 440. In this case, the first sidewall may be formed along eight sides of the first reference wall in the approximately angled C-shape.

The second reference wall of the cover cup may correspond to the first reference wall and may have a shape identical to or similar to that of the first reference wall. But the second refence wall may have a surface area that is different from that a surface area the first reference wall. The shapes of the first and second reference walls of the present disclosure are not limited to the examples illustrated in FIG. 4, and the first reference wall and the second reference wall may be formed in any shape.

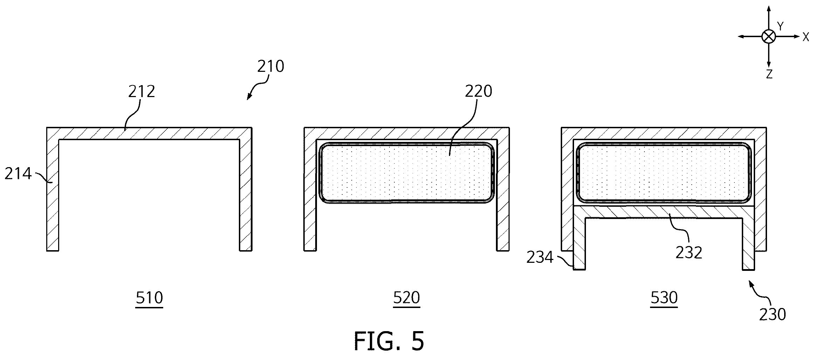

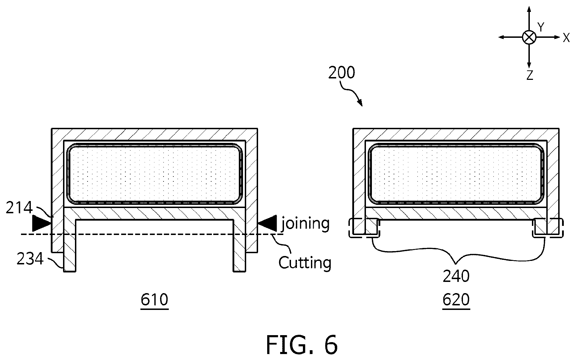

FIGS. 5 and 6 illustrate an example of a process of manufacturing a battery according to embodiments of the present disclosure. According to embodiments, a battery may be manufactured through the processes of first to fifth steps 510 to 620.

Referring to FIG. 5, in the first step 510 a body cup 210 is prepared. The body cup 210 may include a first reference wall 212 and a first sidewall 214 positioned adjacent to the first reference wall 212.

In the second step 520 an electrode assembly 220 is inserted into the body cup 210. The electrode assembly 220 may be inserted into an accommodation space formed inside the body cup 210.

In the third step 530 a cover cup 230 is positioned inside the body cup 210 into which the electrode assembly 220 is inserted. The cover cup 230 may include a second reference wall 232 and a second sidewall 234 positioned adjacent to the second reference wall 232. The cover cup 230 may be positioned inside the body cup 210 so that the second reference wall 232 of the cover cup 230 is parallel to the first reference wall 212 of the body cup 210 and closes the open end of the body cup 210. At least a portion of the outer circumferential surface of the second sidewall 234 of the cover cup 230 comes into contact with at least a portion of the inner circumferential surface of the first sidewall 214 of the body cup 210.

Referring to FIG. 6, in the fourth step 610 a portion of the first sidewall 214 and a portion of the second sidewall 234 are joined and cut. Portions of the overlapping parts of the first sidewall 214 of the body cup 210 and the second sidewall 234 of the cover cup 230 are joined (e.g., metal-joined such as welded, brazed, or soldered). For example, at least portions of the overlapping parts of the inner circumferential surface of the first sidewall 214 of the body cup 210 and the outer circumferential surface of the second sidewall 234 of the cover cup 230 may be joined. Also, a portion of the first sidewall 214 and a portion of the second sidewall 234 may be cut along a line that is parallel to the first reference wall 212 and the second reference wall 232.

In the fifth step 620 the bonding and cutting are completed. The battery 200 includes a flange 240 extending in a direction perpendicular to the first reference wall 212 and the second reference wall 232 (e.g., the extension direction of the first sidewall 214 and the second sidewall 234). A finished product may be produced by performing additional processing on the battery 200 (e.g., an electrode terminal formation, etc.).

FIG. 7 illustrates examples of electrode assemblies 220_1 and 220_2 according to embodiments of the present disclosure. Referring to FIG. 7, the electrode assemblies 220_1 and 220_2 may be formed by stacking or winding.

According to embodiments, the electrode assembly 220_1 may be formed by stacking a positive electrode, a negative electrode, and a separator in one direction. In the first example 710, the electrode assembly 220_1 may be formed to extend in the same direction as the flange 240 (e.g., a direction perpendicular to the first reference wall 212 and the second reference wall 232, the Z-axis direction shown in FIG. 7). As the battery is repeatedly charged and discharged, swelling of the battery may occur in a direction (the Z-axis direction in FIG. 7) including in a direction perpendicular to the first reference wall 212 and the second reference wall 232. A direction in which swelling of the battery occurs may be the thickness direction of the battery.

According to embodiments, an electrode terminal of the battery may be arranged on a sidewall perpendicular to the Y-axis direction among sidewalls of the body cup. Two electrode terminals may be arranged on one of the sidewalls perpendicular to the Y-axis direction. Two electrode terminals may be respectively arranged on two sidewalls among the sidewalls perpendicular to the Y-axis direction. When the electrode terminals are arranged in this structure, it is possible to configure the battery structure taking into account the swelling direction of the battery. By utilizing the surplus space resulting from the formation of the flange, changes in battery volume due to swelling of the battery may be minimized, and thus, high energy density may be achieved.

According to embodiments, the electrode assembly 220_2 may be formed by winding an electrode and a separator. The electrode assembly 220_2 may be wound around a winding axis (the Y-axis direction in FIG. 7) that is perpendicular to the direction that the flange 240 extends. The electrode assembly 220_2 may be an electrode assembly 220_2 in which a flat portion F and curved portions R1 and R2 are alternately formed and wound, as in a second example 720. That is, the electrode assembly 220_2 may be a flatly wound form. The flat portion F may be configured such that an electrode and a separator are stacked in one direction. For example, the flat portion F may be stacked in a direction (the Z-axis direction in FIG. 7) that is parallel to the direction that the flange 240 extends, as in a second example 720. In such a case, as the battery is repeatedly charged and discharged, swelling of the battery may occur in a direction (the Z-axis direction in FIG. 7), which is perpendicular to the first reference wall 212 and the second reference wall 232. That is, swelling of the battery may occur in a direction that is the thickness direction of the battery.

According to embodiments, an electrode terminal of the battery may be arranged on a sidewall perpendicular to the Y-axis direction among sidewalls of the body cup. Two electrode terminals may be arranged on one of the sidewalls perpendicular to the Y-axis direction. Two electrode terminals may be respectively arranged on two sidewalls among the sidewalls perpendicular to the Y-axis direction. When the electrode terminals are arranged in this structure, it is possible to configure the battery structure taking into account the swelling direction of the battery. By utilizing the surplus space resulting from the formation of the flange, the changes in battery volume due to swelling may be minimized, and, thus, high energy density may be achieved.

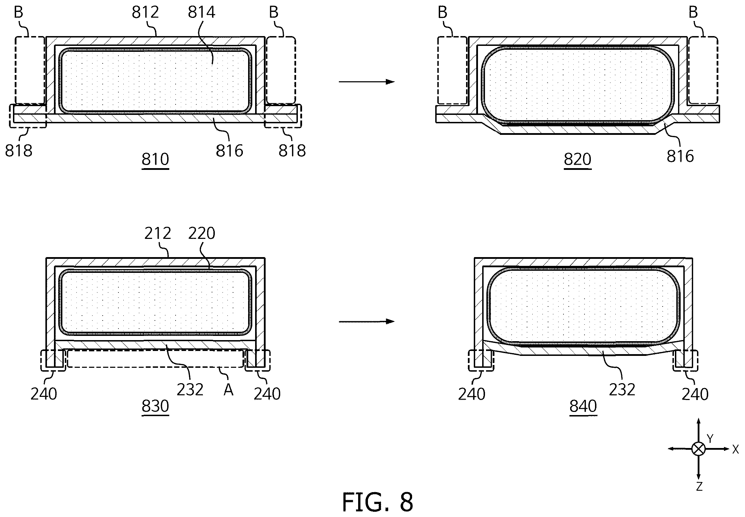

FIG. 8 illustrates an example of swelling occurring in a battery according to embodiments of the present disclosure. As the battery is repeatedly charged and discharged, materials inside the battery may vaporize, and the pressure may cause the battery to swell. The X-axis direction in FIG. 8 may be the width direction of the battery, and the Z-axis direction may be the thickness direction of the battery.

A first comparative example 810 and a second example 820 according to embodiments illustrate examples before and after swelling of the battery. According to the comparative example 810, the battery may include an electrode assembly 814, a case 812 that accommodates the electrode assembly 814, an open end, and a cover plate 816 that covers the open end of the case 812 and has a plate shape. In the battery according to the comparative example, a flange 818 may be formed to extend in the same direction (the X-axis direction in FIG. 8) as the cover plate 816. That is, the extension direction of the flange 818 may be the width direction of the battery. In the comparative example, a surplus space B may be defined outside the battery in the width direction.

Referring to the second example 820, when swelling occurs in the thickness direction (the Z-axis direction in FIG. 8) in the battery according to the comparative example, the cover plate 816 may be deformed in the thickness direction. But the surplus space B is outside the battery in the width direction of the battery and not the direction in which swelling occurs.

A third example 830 and a fourth example 840 respectively illustrate examples before and after swelling of the battery according to embodiments of the present invention. According to the embodiment illustrated in the third example 830, the battery may include an electrode assembly 220, a body cup that accommodates the electrode assembly 220, and a cover cup that closes the open end of the body cup. In addition, a flange 240 may be formed to extend in a direction (the Z-axis direction in FIG. 8) perpendicular to the first reference wall 212 of the body cup and the second reference wall 232 of the cover cup. That is, the direction in which the flange 240 extends may be in the thickness direction of the battery. Thus, a surplus space A surrounded by the second reference wall 232 and the flange 240 is defined outside the battery in the thickness direction.

Referring to the fourth example 840, in the battery according to embodiments of the present disclosure, when swelling occurs in the thickness direction (the Z-axis direction in FIG. 8) of the battery, that is, a direction perpendicular to the first reference wall 212 and the second reference wall 232, the second reference wall 232 of the cover cup may be deformed in the swelling direction. In such a case, the surplus space A outside the battery in the thickness direction may absorb the additional space occupied by the battery due to the swelling (thereby reducing the volume of the surplus space A). Accordingly, the battery of the fourth example 840 may have a higher energy density than the battery of the second example 820. That is, according to embodiments of the present disclosure, as swelling occurs in the battery, the volume of the surplus space A due to the formation of the flange is reduced, thereby achieving a high energy density as compared to the related art.

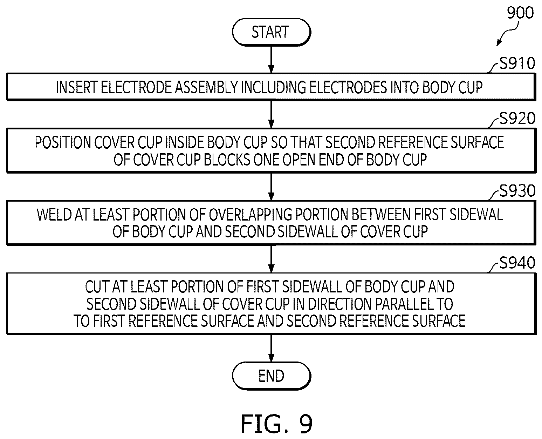

FIG. 9 illustrates a flowchart showing an example of a method for manufacturing a battery according to embodiments of the present disclosure. According to embodiments, a method 900 for manufacturing a battery may be performed by an apparatus for manufacturing a battery, including an inserter, a positioner, a joiner, and a cutter.

First, the apparatus for manufacturing the battery (e.g., the inserter of the apparatus for manufacturing the battery) may insert an electrode assembly including electrodes into a body cup that includes a first reference wall, a first sidewall adjacent to the first reference wall, and an open end (S910). According to embodiments, the body cup may be formed from a metal material like a stainless steel material.

Thereafter, the apparatus for manufacturing the battery (e.g., the positioner of the apparatus for manufacturing the battery) may position a cover cup inside the body cup so that a second reference wall of the cover cup and a second sidewall adjacent to the second reference wall close (block) the open end of the body cup into which the electrode assembly is inserted (S920). According to embodiments, the cover cup may be formed from a metal material, e.g. a stainless steel material.

The apparatus for manufacturing the battery (e.g., the joiner of the apparatus for manufacturing the battery) may join (e.g., metal-join) at least a portion of the overlapping portion between the first sidewall of the body cup and the second sidewall of the cover cup (S930). For example, the apparatus for manufacturing the battery may join at least a portion of the overlapping portion between the inner circumferential surface of the first sidewall of the body cup and the outer circumferential surface of the second sidewall of the cover cup.

The apparatus for manufacturing the battery (e.g., the cutter of the apparatus for manufacturing the battery) may cut at least a portion of the first sidewall of the body cup and the second sidewall of the cover cup along a line that is parallel to the first reference wall and the second reference wall (S940).

In the manufactured battery, at least a portion of the first sidewall and at least a portion of the second sidewall joined to each other may form a flange. The direction that the flange extends may be the same as the direction that the first sidewall and the second sidewall extends. The extension direction of the flange may be perpendicular to the first reference wall and the second reference wall. A surplus space is defined by the second reference wall and the flange.

According to embodiments, an electrode terminal of the battery may be arranged on at least one surface of the first sidewall of the body cup.

According to embodiments, the electrode assembly included in the battery may be formed by stacking electrodes in one direction, with the stacking direction being parallel to the direction that the flange extends. According to other embodiments, the electrode assembly may be an electrode assembly formed by winding electrodes, with the winding axis of the electrode assembly being perpendicular to the direction that the flange extends. The electrode assembly may be an electrode assembly in which a flat portion and a curved portion are alternately formed and wound, and the flat portion of the electrode assembly may have a structure in which electrodes are stacked in one direction. The stacking direction may be parallel to the direction that the flange extends.

According to embodiments, as the battery is repeatedly charged and discharged, swelling may occur in the direction that the flange extends, which is perpendicular to the first reference wall and the second reference wall. As described above, if swelling occurs, the second reference wall is deformed in the direction that the flange extends, and additional volume of the battery resulting from the swelling is absorbed in the volume of the surplus space.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure.

### [DESCRIPTION OF SOME REFERENCE SYMBOLS]

100: battery cell
110: case
120: cap plate
130: terminal
140: bent portion
150: electrolyte injection port
200: battery
210: body cup
212: first reference wall
214: first sidewall
220: electrode assembly
230: cover cup
232: second reference wall
234: second sidewall
240: flange
900: method
A: surplus space
F: flat portion of electrode assembly
R1, 2: curved portion of electrode assembly
S910: insert electrode assembly
S920: position cover cup in body cup
S930: join cups
S940: cut side walls

## Claims

1. A battery (200) comprising:
an electrode assembly (220) comprising electrodes;
a body cup (210) including a first reference wall (212) and at least one first sidewall (214) provided adjacent to the first reference wall (212), the body cup (210) having an open end and accommodating the electrode assembly (220); and
a cover cup (230) including a second reference wall (232) and a second sidewall (234) provided adjacent to the second reference wall (232), the cover cup (230) having an open end and being accommodated in the body cup (210) such that the second reference surface (232) closes the open end of the body cup (212),
wherein at least a portion of the first sidewall (214) and at least a portion of the second sidewall (234) are joined to form a flange (240).

2. The battery (200) as claimed in claim 1, wherein the flange (240) extends in the same direction as the first sidewall (214) and the second sidewall (234).

3. The battery (200) as claimed in claim 1 or 2, wherein the flange (240) extends perpendicular to the first reference wall (212) and the second reference wall (232).

4. The battery (200) as claimed in any of claims 1 to 3, wherein the electrode assembly (220_1) is formed by stacking the electrodes in the direction that the flange (240) extends.

5. The battery (200) as claimed in any of claims 1 to 3, wherein the electrode assembly (220_2) is formed by winding the electrodes about a winding axis that is perpendicular to a direction in which the flange (240) extends.

6. The battery (200) as claimed in any of claims 1 to 3, wherein the electrode assembly (220_2) is a wound electrode assembly in which a flat portion (F) and a curved portion (R1, R2) are alternately formed, with the flat portion (F) being configured such that the electrodes are stacked in a direction that the flange (240) extends.

7. The battery (200) as claimed in any of claims 1 to 6, wherein, the battery (200) is configured to swell in a direction that is perpendicular to the first reference wall (212) and the second reference wall (232).

8. The battery (200) as claimed in claim 7, wherein, the battery (200) is configured such that as the swelling occurs, the second reference wall (232) is deformed in a direction that the flange (240) extends and into a surplus space (A) that is surrounded by the second reference surface (234) and/or the flange (240).

9. The battery (200) as claimed in any of claims 1 to 8, wherein at least a portion of the body cup (210) and/or at least a portion of the cover cup (230) comprises stainless steel.

10. The battery (200) as claimed in any of claims 1 to 9, wherein an electrode terminal (130) is arranged on at least one surface of the first sidewall (214) of the body cup (210).

11. The battery (200) as claimed in any of claims 1 to 10, wherein at least a portion of an inner surface of the first sidewall (214) and at least a portion of an outer surface of the second sidewall (234) are joined.

12. A method (900) of manufacturing a battery (200), the method comprising:
inserting (S910) an electrode assembly (220) comprising electrodes into a body cup (210) comprising a first reference wall (212) and a first sidewall (214) provided adjacent to the first reference wall (212), with the body cup (210) having an open end;
positioning (S920) a cover cup (230) in the body cup (210), and cover cup (230) comprising a second reference wall (232) and a second sidewall (234) provided adjacent to the second reference wall (232), such that the second reference wall (232) of the cover cup (230) closes the open end of the body cup (210); and
joining (S930) at least portions of overlapping portions of the first sidewall (214) of the body cup (210) and the second sidewall (234) of the cover cup (230),
wherein at least a portion of the first sidewall (214) and at least a portion of the second sidewall (234) that are joined to each other form a flange (240).

13. The method (900) as claimed in claim 12, further comprising cutting (S940) at least a portion of the first sidewall (214) of the body cup (210) and the second sidewall (234) of the cover cup (230) along a line that is parallel to the first reference wall (212) and the second reference wall (232).

14. The method (900) as claimed in claim 12 or 13, wherein the flange (240) extends is the same direction as the first sidewall (214) and the second sidewall (234).

15. The method (900) as claimed in any of claims 12 to 14, wherein the flange (240) extends in a direction that is perpendicular to the first reference wall (212) and the second reference wall (232).
